(19) Europäisches Patentamt
European Patent Office
Office européen des brevets

(11) EP 1 354 785 A1

(12) # EUROPEAN PATENT APPLICATION
published in accordance with Art. 158(3) EPC

(43) Date of publication:
**22.10.2003 Bulletin 2003/43**

(21) Application number: **01272867.1**

(22) Date of filing: **26.12.2001**

(51) Int Cl.[7]: **B62D 5/083**, F16J 15/10

(86) International application number:
**PCT/JP01/11445**

(87) International publication number:
**WO 02/053446 (11.07.2002 Gazette 2002/28)**

(84) Designated Contracting States:
**AT BE CH CY DE DK ES FI FR GB GR IE IT LI LU MC NL PT SE TR**

(30) Priority: **28.12.2000 JP 2000401471**

(71) Applicant: **Daikin Industries, Ltd.**
**Osaka-shi, Osaka 530-8323 (JP)**

(72) Inventors:
- **YANAGIGUCHI, Tomihiko, c/o Yodogawa-seisakusho Settsu-shi, Osaka 566-8585 (JP)**
- **SUKEGAWA, Masamichi, c/o Yodogawa-seisakusho Settsu-shi, Osaka 566-8585 (JP)**
- **ASANO, Michio, c/o Yodogawa-seisakusho, Settsu-shi, Osaka 566-8585 (JP)**

(74) Representative: **HOFFMANN EITLE**
**Patent- und Rechtsanwälte**
**Arabellastrasse 4**
**81925 München (DE)**

(54) **SEAL RING AND POWER STEERING VALVE DEVICE PROVIDED WITH IT**

(57) The present invention relates to a seal ring comprising 40 to 94 % by weight of polytetrafluoroethylene powder and 6 to 60 % by weight of aromatic polyoxybenzoylester heat resistant resin powder or 40 to 94 % by weight of polytetrafluoroethylene powder, 3 to 30 % by weight of aromatic polyoxybenzoylester heat resistant resin powder and 3 to 30 % by weight of molybdenum disulfide powder or 3 to 30 % by weight of tungsten disulfide powder. The seal ring has little deformation by bulging of the seal even when used under pressure, can restrict the abrasion of a contacting material even when made of soft metal, providing a stable sealing effect over a long period. Furthermore, the seal ring is low in friction and change in sliding torque and therefore can significantly improve control and response of a device equipped with the seal ring. Also, the present invention provides a power steering valve device, an automatic transmission which slides at a high rotation speed and a shock absorber which requires sealing in a reciprocating sliding environment, which are equipped with the above seal ring.

FIG. 1

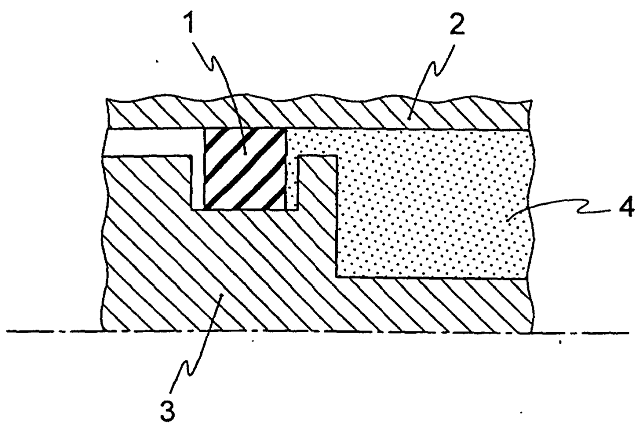


EP 1 354 785 A1

## Description

TECHNICAL FIELD

The present invention relates to a power steering valve device equipped with a specific seal ring, particularly a seal ring which exhibits stable sliding torque over a long period from the beginning of use. The present invention also relates to a seal ring which has little deformation by bulging even under use in high pressure and can significantly restrict the abrasion of a contacting material even when made of soft metal. Furthermore, the seal ring of the present invention can suitably be used as a seal ring for a power steering valve device of an automobile. In addition, as the seal ring of the present invention exhibits abrasion resistance to the contacting material and stable friction resistance over a long period from the beginning of use, the seal ring of the present invention can suitably be used for an automatic transmission device and a shock absorber device.

BACKGROUND ART

Polytetrafluoroethylene (PTFE) powder (granular resin powder) has favorable properties such as non-adhesiveness, low sliding friction and heat resistance but also has the fault of lacking strength when made into a molded article. In order to overcome this fault, organic fillers such as polyimide resin powder or inorganic fillers such as carbon fiber, bronze powder and graphite powder are frequently added and PTFE compositions obtained by combining various fillers according to purpose and use have been suggested.

On the other hand, a seal ring is used for example in a situation such as depicted in Fig. 1 by a schematic cross sectional view. Specifically, seal ring 1 is implanted between two members (housing 2 and seal ring set body 3) which move relatively as a rotating member or sliding member and is the ring shaped member which seals oil 4. In Fig. 1, seal ring 1 is wrapped around seal ring set body 3 and forms a sliding surface between housing 2 and seal ring set body 3. During use, as shown in Fig. 2, seal ring set body 3 rotates against housing 2. However, in the case that a relatively high oil pressure is applied from oil 4 and seal ring set body 3 repeatedly rotates in both directions, oil 4 may leak as the sliding torque may fluctuate largely during use or as a result of long term use, the end part of seal ring 1 may be scraped, forming bulging part 5 (Fig. 3), or furthermore, when housing 2 is made of soft metal such as aluminum, housing 2 may wear out, forming trench 6 (Fig. 4).

These various problems of a seal ring are important problems to be solved in a device such as power steering of an automobile which places importance on feeling and safety when driving.

Also, even in the case that the oil pressure from oil 4 is relatively low, when seal ring body 3 rotates against housing 2 at a high speed, as a result of long term use, oil 4 may leak as housing 2 may wear out, forming trench 6 when housing 2 is made of soft metal such as aluminum.

These various problems of a seal ring are important problems to be solved in a device such as an automatic transmission of an automobile which places importance on safety when driving.

Furthermore, when used in a situation such as depicted in Fig. 5 by a schematic cross sectional view in which the two members which move relatively are piston 7 and cylinder 8 and piston 7 reciprocates repeatedly against cylinder 8 while seal ring 1 which is implanted between these seals oil 4, during use, oil 4 may leak, as the friction resistance (sliding resistance) which occurs in the sliding surface of seal ring 1 and cylinder 8 may fluctuate largely or as a result of long time use, as shown in Fig. 6, the end part of seal ring 1 may be scraped or furthermore, even when cylinder 8 is prepared from relatively hard carbon steel, cylinder 8 may wear out forming trench 9.

These various problems of a seal ring are important problems to be solved in a device such as a shock absorber which places importance on safety when driving.

Examples of a conventionally suggested PTFE composition for a seal ring of which the above properties are demanded are:

(1) PTFE powder/polyimide (PI) powder/carbon fiber (JP-A-9-208929);
(2) PTFE powder/aromatic polyoxybenzoylester heat resistant resin powder/carbon fiber (JP-B-1-13494, JP-A-11-21408); and
(3) PTFE powder/graphite powder/carbon fiber (JP-A-5-239440).

However, particularly under high pressure such as when the oil pressure is at least 8 MPa, breakage of the seal ring and abrasion of the contacting material (housing) occur in a relatively short period and the conventional PTFE composition is considered to have a certain limit in durability.

Also, under a high speed sliding environment in which the number of rotations is at least 7000 rpm, abrasion of the contacting material occurs in a short period and the conventional PTFE composition is considered to have a certain limit in durability.

Furthermore, in an environment of a high pressure where the oil pressure is at least 8 MPa and reciprocate sliding is repeated, breakage of the seal ring and abrasion of the contacting material occur in a relatively short period and the conventional PTFE composition is considered to have a certain limit in durability.

The object of the present invention is to provide a seal ring which has little change in sliding torque, no breakage even when used for a long period in an high oil pressure environment, high rotation speed environment and high speed reciprocate environment, little deformation by bulging of the seal and little abrasion in a contacting material of soft metal. This seal ring has overcome the conventional limitation of properties.

DISCLOSURE OF INVENTION

The present invention relates to a power steering valve device, automatic transmission device and shock absorber device equipped with a seal ring of the three types described below.

The first type of seal ring comprises 40 to 94 % by weight of PTFE powder and 6 to 60 % by weight of a filler, wherein the filler essentially consists of aromatic polyoxybenzoylester heat resistant resin powder.

The second type of seal ring comprises 40 to 94 % by weight of PTFE powder, 3 to 30 % by weight of aromatic polyoxybenzoylester heat resistant resin powder and 3 to 30 % by weight of molybdenum disulfide powder.

The third type of seal ring comprises 40 to 94 % by weight of PTFE powder, 3 to 30 % by weight of aromatic polyoxybenzoylester heat resistant resin powder and 3 to 30 % by weight of tungsten disulfide powder.

As the PTFE powder, modified PTFE powder is preferable.

The power steering valve device of the present invention, particularly power steering of an automobile is for example as shown in Fig. 1 a power steering valve device equipped with housing 2 made of soft metal, seal ring set body 3 and seal ring 1 made for example by resin which seals oil 4 located between housing 2 and seal ring set body 3 and characterized in that seal ring 1 is any one of the three types of seal rings.

Also, as the seal ring of the power steering valve device of the present invention, a seal ring, which does not break at 200,000 cycles, in which the sliding torque from the time when the initial fluctuation of the sliding torque settles until 200,000 cycles is at least 75 % of the maximum sliding torque during this period and the abrasion depth of the contacting material after 200,000 cycles is at most 15 µm, when sliding cycles are applied under the following conditions 1 which are the usual seal ring durability evaluation test conditions, is suitable.

(Conditions 1)

Test equipment: test equipment for evaluation of durability of seal ring having basically the same mechanism as a rack and pinion type power steering system

Oil pressure: 12 MPa
Oil temperature: 120°C
Oil type: power steering fluid
Cycle: One cycle consisting of normal rotation at 95 rpm for 2 seconds and reverse rotation at 95 rpm for 2 seconds.
Opposite material: Aluminum die cast (JIS H5302)
Seal ring mounting member: Carbon steel (JIS G4051)
Seal ring: outer diameter 36.4 mm, width 1.5 mm, height 1.8 mm

The seal ring durability evaluation test of the present invention is conducted using a seal ring having a shape as mentioned above (outer diameter: 36.4 mm, width: 1.5 mm, height: 1.8 mm), which is the shape of a seal ring for a power steering valve commonly used in Japan. In addition to this, a seal ring having an outer diameter of 36.2 mm, a width of 1.25 mm and a height of 1.83 mm and a seal ring having an outer diameter of 38.4 mm, a width of 1.45 mm and a height of 2.00 mm may also be used. Even when the latter seal rings are used, the test results are nearly the same, regardless of the difference in shape.

As the seal ring durability evaluation test device, a device having a structure similar to a power steering valve device, which is actually used in an automobile (actual device), is used. The structure similar to an actual device refers to a device having the same structure as the actual device regarding the seal ring installation member (housing, seal ring set body, seal ring) (same regarding test equipment described below). In the case of a power steering valve device of an automobile, regardless of the vehicle type, as long as the device is a rack and pinion type power steering, the seal ring installation member has the same structure. Therefore, properties when applied to an actual device can be evaluated by using this sort of testing device. An actual valve device is shown in a cross sectional view in, for example, Fig. 5 (a) of Engineering Journal No. 148, 1995, p. 92, published by Koyo Seiko Co., Ltd.

To a large sized power steering valve device of a large automobile such as a truck and special vehicle such as a power shovel and bulldozer, high oil pressure is applied for example when the steering wheel is turned a great

deal. In order for the steering wheel to be turned smoothly even when high oil pressure is applied, fluctuation in sliding torque is preferably small when change in oil pressure is high.

The seal ring of the power steering valve device of the present invention is applicable in such large power steering and furthermore, is a seal ring which does not break at 200,000 cycles, in which the sliding torque from the time when the initial fluctuation of the sliding torque settles until 200,000 cycles is at least 75 %, more preferably at least 80 %, of the maximum sliding torque during this period and the ratio Tmax 15/Tmax12 of the maximum sliding torque when oil pressure is 15 MPa, Tmax 15, and the maximum sliding torque when oil pressure is 12 MPa, Tmax12, from the time when initial fluctuation of the sliding torque settles until 200,000 cycles is less than 1.5, more preferably at most 1.3, when sliding cycles are applied under the following conditions 1-a.

(Conditions 1-a)

Test equipment: test equipment for evaluation of durability of seal ring having basically the same mechanism as a rack and pinion type power steering system

Oil pressure: 15 MPa
Oil temperature: 135°C
Oil type: power steering fluid
Cycle: One cycle consisting of normal rotation at 95 rpm for 2 seconds and reverse rotation at 95 rpm for 2 seconds.
Opposite material: Aluminum die cast (JIS H5302)
Seal ring mounting member: Carbon steel (JIS G4051)
Seal ring: outer diameter 36.4 mm, width 1.5 mm, height 1.8 mm

In a sliding test under high pressure sliding torque is not stable and rises suddenly from the time when sliding is started to approximately 50,000 cycles. Therefore, the condition "from the time when the initial fluctuation of the sliding torque settles" has the purpose of excluding this sort of unstable initial fluctuation.

The automatic transmission device of the present invention is an automatic transmission device equipped with housing 2, seal ring set body 3 and seal ring 1 made for example by resin which seals oil 4 located between housing 2 and seal ring set body 3 and characterized in that seal ring 1 is any one of the three types of seal rings described above.

The present invention also relates a shock absorber device to which a high rotation number of reciprocate sliding (stroke) is applied.

The shock absorber device of the present invention is a shock absorber device equipped with cylinder 8, piston 7 and seal ring 1 made for example by resin which seals oil 4 located between cylinder 8 and piston 7 and characterized in that seal ring 1 is any one of the three types of seal rings described above.

Also, the present invention relates to the three types of seal rings described above.

BRIEF DESCRIPTION OF DRAWINGS

Fig. 1 is partial schematic cross sectional view of when the seal ring of the present invention is installed in a power steering valve device or an automatic transmission device.
Fig. 2 is a partial schematic cross sectional view illustrating the general change which occurs in a seal ring when the device shown in Fig. 1 is rotated.
Fig. 3 is a partial schematic cross sectional view illustrating the breakage which occurs to the seal ring when the device shown in Fig. 1 is rotated.
Fig. 4 is a partial schematic cross sectional view illustrating the abrasion which occurs to the contact material (housing) when the device shown in Fig. 1 is rotated.
Fig. 5 is a partial schematic cross sectional view of when the seal ring of the present invention is installed in a shock absorber device.
Fig. 6 is a partial schematic cross sectional view illustrating the abrasion which occurs to the seal ring and contacting material (cylinder) when the device shown in Fig. 5 is reciprocated.
Fig. 7 is a graph showing the change in sliding torque of the seal ring of Example 1 used in a durability test.
Fig. 8 is a graph showing the change in sliding torque of the seal ring of Example 2 used in a durability test.
Fig. 9 is a graph showing the change in sliding torque of the seal ring of Example 3 used in a durability test.
Fig. 10 is a graph showing the change in sliding torque of the seal ring of Comparative Example 1 used in a durability test.

Fig. 11 is a graph showing the change in sliding torque of the seal ring of Comparative Example 2 used in a durability test.
Fig. 12 is a graph showing the change in sliding torque of the seal ring of Comparative Example 3 used in a durability test.
Fig. 13 is a graph showing the change in sliding torque of the seal ring of Comparative Example 4 used in a durability test.
Fig. 14 is a graph showing the change in sliding torque of the seal ring of Comparative Example 5 used in a durability test.
Fig. 15 is a graph showing the change in sliding torque of the seal ring of Example 4 used in a durability test.
Fig. 16 is a graph showing the change in sliding torque of the seal ring of Example 5 used in a durability test.
Fig. 17 is a graph showing the change in sliding torque of the seal ring of Comparative Example 6 used in a durability test.
Fig. 18 is a graph showing the change in sliding torque of the seal ring of Comparative Example 7 used in a durability test.

BEST MODE FOR CARRYING OUT THE INVENTION

First, the component that the three types of seal rings have in common is described.
The PTFE powder used in the present invention may be a homopolymer of tetrafluoroethylene or a PTFE powder modified by another monomer copolymerizable with tetrafluoroethylene. From the viewpoint of superior heat resistance, chemical resistance and creep resistance, modified PTFE is preferable.
An example of modified PTFE is modified PTFE which cannot be melt molded and contains 0.001 to 1 % by weight of a perfluoro(vinyl ether) unit represented by the formula (1):

$$-CF_2-CF(-O-X)- \quad (1)$$

(wherein X represents a perfluoroalkyl group having 1 to 6 carbon atoms or a perfluoroalkoxyalkyl group having 4 to 9 carbon atoms).
Examples of perfluoro(vinyl ether) are perfluoro(alkyl vinyl ethers) such as perfluoro(methyl vinyl ether) (PMVE), perfluoro(ethyl vinyl ether) (PEVE), perfluoro(propyl vinyl ether) (PPVE) and perfluoro(butyl vinyl ether) (PBVE).
The average particle size of the PTFE powder is 10 to 120 μm, more preferably 10 to 50 μm.
From the viewpoint of superior heat resistance, chemical resistance and abrasion resistance, a resin powder having the following structural unit (I) is suitable as the aromatic polyoxybenzoylester heat resistant resin powder compounded in the present invention:

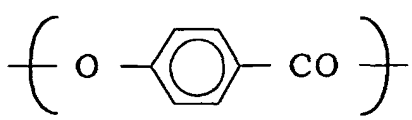
(I)

In addition to structural unit (I), structural unit (II) and/or (III) may also be included.

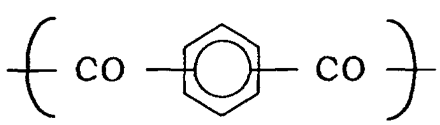
(II)

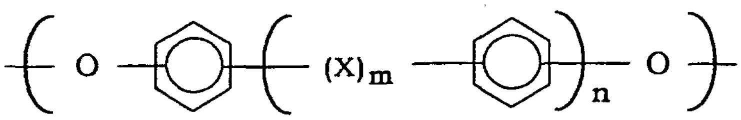

(III)

(In the formula, X represents -O-, m represents 0 or 1, n represents 0 or 1). Examples of commercial products are Sumikasuper (available from Sumitomo Chemical Co., Ltd.) and Econol (available from Carborundum Corporation). Resin powder having an average particle size of 1 to 300 μm, more preferably 5 to 150 μm, most preferably 10 to 50 μm is preferable in that the dispersibility of the resin powder is favorable and the strength of the obtained seal ring is superior.

The aromatic polyoxybenzoylester heat resistant resin powder may be a powder that has been surface treated by a silane coupling agent or that has been subjected to various water repellent treatments.

The type 1 seal ring of the present invention is a seal ring which actually contains only aromatic polyoxybenzoylester heat resistant resin powder as a filler.

The compounding ratio (% by weight) of PTFE powder and aromatic polyoxybenzoylester heat resistant resin powder is 40 to 94/6 to 60 (total 100 % by weight), more preferably 70 to 90/10 to 30, most preferably 75 to 90/10 to 25. When the amount of aromatic polyoxybenzoylester heat resistant resin powder becomes too large, the original properties of PTFE are lost and when the amount is too little, abrasion resistance decreases.

The type 2 seal ring also contains molybdenum disulfide powder in addition to aromatic polyoxybenzoylester heat resistant resin powder as the filler.

Examples of the molybdenum disulfide powder are Moly Powder PA (available from Sumico Lubricant Co., Ltd.) and C Powder (available from Nichimori Century Co., Ltd.). The average particle size of the molybdenum disulfide powder is preferably 0.1 to 500 μm, more preferably 0.5 to 20 μm.

The compounding ratio (% by weight) of PTFE powder, aromatic polyoxybenzoylester heat resistant resin powder and molybdenum disulfide powder is 40 to 94/3 to 30/3 to 30 (total 100 % by weight), more preferably 70 to 90/5 to 15/5 to 15, most preferably 75 to 90/5 to 15/5 to 10. When the amount of aromatic polyoxybenzoylester heat resistant resin powder becomes too large, the original properties of PTFE are lost and when the amount is too little, abrasion resistance decreases. When the amount of molybdenum disulfide powder is too large, contacting material of soft metal such as aluminum tends to become damaged and when the amount is too little, durability decreases.

The type 3 seal ring also contains tungsten disulfide powder in addition to aromatic polyoxybenzoylester heat resistant resin powder as the filler.

An example of the tungsten disulfide powder is $WS_2A$ (available from Nihon Junkatsuzai Co., Ltd.). The average particle size of tungsten disulfide powder is 0.1 to 500 μm, more preferably 0.5 to 20 μm.

The compounding ratio (% by weight) of PTFE powder, aromatic polyoxybenzoylester heat resistant resin powder and tungsten disulfide powder is 40 to 94/3 to 30/3 to 30 (total 100 % by weight), more preferably 70 to 90/5 to 15/5 to 15, most preferably 75 to 90/5 to 15/5 to 10. When the amount of aromatic polyoxybenzoylester heat resistant resin powder becomes too large, the original properties of PTFE are lost and when the amount is too little, abrasion resistance decreases. When the amount of tungsten disulfide powder is too large, contacting material of soft metal such as aluminum tends to become damaged and when the amount is too little, durability decreases.

In the present invention, aromatic polyoxybenzoylester heat resistant resin powder alone or a combination of aromatic polyoxybenzoylester heat resistant resin powder and molybdenum disulfide powder or aromatic polyoxybenzoylester heat resistant resin powder and tungsten disulfide powder is necessary and sufficient. However, other fillers may be compounded as long as the effect which is the object of the present invention is not lost.

These powders are mixed by the usual method, granulated to obtain resin powder for molding a seal ring when required and then molded into a seal ring by various known molding methods such as compression molding, ram extrusion molding, isostatic molding, hot coining molding, etc. In any of the molding methods, ultimately, the molded article is sintered. In the present invention, the sintering temperature is 323° to 400°C, preferably from 350° to 385°C.

When measured under the above-mentioned test conditions 1, the seal ring for a power steering valve device obtained in this way

(A) does not break even after 200,000 sliding cycles;
(B) has a sliding torque from 10,000 cycles to 200,000 cycles which is at least 75 %, more preferably at least 80 % of the maximum sliding torque between this period; and
(C) the abrasion depth of the contacting material after 200,000 cycles is at most 15 μm, more preferably at most 10 μm, most preferably at most 5 μm.

A seal ring which has all of these properties is an innovative seal ring which has by far surpassed the conventional limit. Particularly, the points that deformation of the seal by bulging is small and abrasion of contacting material of soft metal is small are especially noteworthy.

Examples of the devices in which the seal ring of the present invention is applied area hydraulic power steering device, automatic transmission, engine piston ring and shock absorber for automobiles and hydraulic cylinder for industrial machinery. Of these, the seal ring is suitable as a seal ring for a power steering valve device of an automobile for which properties such as low resistance when sliding, low abrasion of the contacting material, little deformation of the seal under high pressure (at least 8 MPa), and little oil leakage under long term use are particularly desired.

The seal ring for a power steering valve device to which a higher oil pressure is applied is a seal ring which does not break at 200,000 cycles, in which the sliding torque from the time when the initial fluctuation of the sliding torque settles until 200,000 cycles is at least 75 %, more preferably at least 80 %, of the maximum sliding torque during this period and the ratio Tmax 15/Tmax12 of the maximum sliding torque when oil pressure is 15 MPa, Tmax15 and the maximum sliding torque when oil pressure is 12 MPa, Tmax12, from the time when initial fluctuation of the sliding torque settles until 200,000 cycles is less than 1.5, more preferably at most 1.3, when measured under the above test conditions 1-a.

Also, the seal ring of the present invention is suitable as a seal ring for an automatic transmission and shock absorber which places importance on safety and require durability.

The seal ring for an automatic transmission is more preferably a seal ring which does not break at 500 hours and in which the abrasion depth of the contacting material after 500 hours is at most 10 μm, when subjected to rotation sliding under the following conditions 2.

(Conditions 2)

Test equipment: test equipment for evaluation of durability of seal ring having basically the same mechanism as an automatic transmission system

Oil pressure: 2 MPa
Oil temperature: 120°C
Oil type: automatic transmission fluid
Rotation number: 8,000 rpm
Opposite material: Aluminum die cast (JIS H5302)
Seal ring mounting member: Cast iron (JIS G5501)
Seal ring: outer diameter: 50 mm, width: 2 mm, height: 2 mm.

The seal ring for a shock absorber is preferably a seal ring which does not break at 5,000,000 strokes, in which the maximum sliding resistance Fmax from the time when the initial fluctuation of the sliding torque settles until 5,000,000 strokes is less than 1.5 times the minimum sliding resistance Fmin during this period and the oil leakage amount after 5,000,000 strokes is at most 15 ml, when reciprocate sliding strokes are applied under the following conditions 3.

(Conditions 3)

Test equipment: test equipment for evaluation of durability of seal ring having basically the same mechanism as a shock absorber system

Oil pressure: 10 MPa
Oil temperature: 100°C
Oil type: shock absorber oil
Stroke length: 60 mm
Vibration frequency: 3 Hz
Opposite material: Carbon steel (JIS G4051)
Seal ring mounting member: Cast iron (JIS G5501)
Seal ring: outer diameter 28.5 mm, width 7.4 mm, height 0.8 mm (diameter of applied piston: 25 mm).

The present invention is explained in detail through Examples below, but the present invention is not limited thereto.

EXAMPLE 1

90 parts by weight of PTFE powder (average particle size 30 μm) modified by 1 % by weight of perfluoro (propyl vinyl ether) and 10 parts by weight of aromatic polyoxybenzoylester heat resistant resin powder (Sumikasuper (product name), available from Sumitomo Chemical Co., Ltd., average particle size 20 μm) were pre-compounded by the usual method and then granulated to prepare resin powder for molding.
Using this resin powder for molding, a seal ring for testing (inner diameter 33.4 mm, outer diameter 36.4 mm, height 1.8 mm) was prepared by compression molding. Regarding this seal ring, a durability test was conducted according to the above conditions 1. The results are shown in Table 1.

Test method

Test equipment: test equipment for evaluation of durability of seal ring having basically the same mechanism as a rack and pinion type power steering system
Oil pressure: 12 MPa
Oil temperature: 120°C
Oil type: power steering fluid (Rodeo PSF (product name) available from Nippon Mitsubishi Oil Corporation)
Cycle: One cycle consisting of normal rotation at 95 rpm for 2 seconds and reverse rotation at 95 rpm for 2 seconds.
Opposite material: Aluminum die cast ADC 12 (JIS H5302)
Seal ring mounting member: Carbon steel S45C (JIS G4051)
Seal ring: outer diameter 36.4 mm, width 1.5 mm, height 1.8 mm
Evaluated properties

(Durability time)

The sliding cycle when the seal ring breaks (leaks oil) is considered to be the durability time. When the seal ring does not break at 200,000 cycles, the test is discontinued.

(Change in sliding torque)

The rotation torque of when the two seal rings sealing the oil are rotated at 95 rpm (for 2 seconds) is recorded. The change in rotation torque from after the completion of the sudden initial rise in torque (7,000 to 25,000 cycles) until 200,000 cycles is considered to be the change in sliding torque.
The measured results are shown in a graph in which sliding cycle is the horizontal axis and sliding torque (N. m) is the vertical axis (Fig. 7).
Furthermore, the maximum sliding torque Tmax from between 10,000 cycles and 200,000 cycles is shown in Table 1.

(Maximum abrasion depth of contacting material)

The maximum depth (μm) of the abrasion area (represented by trench 6 in Fig. 4) in the contacting material (aluminum die cast) when the seal ring breaks or when discontinued at 200,000 cycles is measured by a surface roughness tester (Surftest SV-600 (product name) available from Mitutoyo Corporation).

(Bulging of the seal ring)

Excluding those which broke (leaked oil) midway, the length (mm) of the part of the seal ring which bulged out (represented by bulging part 5 of Fig. 2 and Fig. 3) when discontinued at 200,000 cycles was measured.

EXAMPLE 2

90 parts by weight of PTFE powder (average particle size 30 μm) modified by 1 % by weight of perfluoro (propyl vinyl ether), 5 parts by weight of aromatic polyoxybenzoylester heat resistant resin powder (above Sumikasuper) and 5 parts by weight of molybdenum disulfide powder (Moly Powder PA (product name) available from Sumico Lubricant Co., Ltd., average particle size 1.5 μm) were pre-compounded by the usual method and then granulated to prepare resin powder for molding.

Using this resin powder for molding, a seal ring for testing (inner diameter 33.4 mm, outer diameter 36.4 mm, height 1.8 mm) was prepared in the same manner as in Example 1. Regarding this seal ring, a durability test was conducted in the same manner as in Example 1. The results are shown in Table 1. The measured results are shown in a graph in which sliding cycle is the horizontal axis and sliding torque (N·m) is the vertical axis (Fig. 8).

EXAMPLE 3

90 parts by weight of PTFE powder (average particle size 30 μm) modified by 1 % by weight of perfluoro (propyl vinyl ether), 5 parts by weight of aromatic polyoxybenzoylester heat resistant resin powder (Sumikasuper (product name), available from Sumitomo Chemical Co., Ltd., average particle size 20 μm) and 5 parts by weight of tungsten disulfide powder ($WS_2A$ (product name) available from Nihon Junkatsuzai Co., Ltd., average particle size 4 μm) were pre-compounded by the usual method and then granulated to prepare resin powder for molding.

Using this resin powder for molding, a seal ring for testing (inner diameter 33.4 mm, outer diameter 36.4 mm, height 1.8 mm) was prepared in the same manner as in Example 1. Regarding this seal ring, a durability test was conducted in the same manner as in Example 1. The results are shown in Table 1. The measured results are shown in a graph in which sliding cycle is the horizontal axis and sliding torque (N·m) is the vertical axis (Fig. 9).

COMPARATIVE EXAMPLES 1 to 5

Granulation was conducted and a seal ring for comparison was prepared in the same manner as in Example 1 except that the fillers shown in Table 1 were used. Durability was measured in the same manner as in Example 1. The results are shown in Table 1 and Figs. 10 to 14 (graph of change in sliding torque).

The abbreviations of the fillers used in Table 1 and Table 2 described later are as follows.

POB: aromatic polyoxybenzoylester heat resistant resin powder (Sumikasuper available from Sumitomo Chemical Co., Ltd., average particle size 20 μm)
MO: molybdenum disulfide powder (Moly Powder PA available from Sumico Lubricant Co., Ltd., average particle size 1.5 μm)
$WS_2$: tungsten disulfide powder ($WS_2A$ (product name) available from Nihon Junkatsuzai Co., Ltd., average particle size 4 μm)
CF: carbon fiber (M2006S available from Kureha KK, average fiber diameter 15 μm, average fiber length 100 μm)
GRA: artificial graphite powder (EG-1C available from Nippon Carbon Co., Ltd., average particle size 35 μm)
BZ: bronze powder (SD-200 available from Fukuda Metal KK, average particle size 20 μm)
PI: polyimide powder (Chelimide 1050 available from Asahi Ciba Co., Ltd., average particle size 20 μm)

Table 1

| | Ex. | | | Com. Ex. | | | | |
|---|---|---|---|---|---|---|---|---|
| | 1 | 2 | 3 | 1 | 2 | 3 | 4 | 5 |
| Seal ring | | | | | | | | |
| PTFE powder | 90 | 90 | 90 | 80 | 89 | 60 | 83 | 90 |
| Fillers | | | | | | | | |
| POB | 10 | 5 | 5 | 15 | | | | |
| MO | | 5 | | | | | | |
| $WS_2$ | | | 5 | | | | | 10 |
| CF | | | | 5 | 4 | 10 | 5 | |
| GRA | | | | | 7 | | | |
| BZ | | | | | | 30 | | |
| PI | | | | | | | 12 | |
| Durability properties | | | | | | | | |
| Durability time | 200,000 Cycles (Discontinued) | 200,000 Cycles (Discontinued) | 200,000 Cycles (Discontinued) | 200,000 Cycles (Discontinued) | 36,800 (Breakage) | 62,700 (Breakage) | 56,500 (Breakage) | 146,800 (Breakage) |
| Change in sliding torque | Fig. 7 | Fig. 8 | Fig. 9 | Fig. 10 | Fig. 11 | Fig. 12 | Fig. 13 | Fig. 14 |
| Maximum sliding torque Tmax(N·m) | 1.7 | 1.9 | 1.5 | 2.5 | 2.7 | 3.7 | 2.4 | 1.9 |
| Minimum sliding torque Tmin(N·m) | 1.3 | 1.6 | 1.3 | 1.5 | 1.9 | 1.7 | 1.7 | 1.3 |
| (Tmin/Tmax)×100(%) | 76 | 84 | 87 | 60 | 70 | 46 | 71 | 68 |
| Maximum abrasion depth of contacting material (μm) | 1.2 | 3.9 | 0.1 | 10.4 | 37.0 | 38.5 | 37.5 | 10.0 |
| Bulging of seal (mm) | 0.2 | 0.4 | 0.5 | 2.1 | Breakage | Breakage | Breakage | Breakage |

EXAMPLE 4

Regarding the seal ring prepared in Example 1, a durability test was conducted according to the following conditions 1-a. The results are shown in Table 2. The measured results are shown in a graph in which sliding cycle is the horizontal axis and sliding torque (N·m) is the vertical axis (Fig. 15).

Test method

(Conditions 1-a)

Test equipment: test equipment for evaluation of durability of seal ring having basically the same mechanism as a rack and pinion type power steering system

Oil pressure: 15 MPa
Oil temperature: 135°C
Oil type: power steering fluid
Cycle: One cycle consisting of normal rotation at 95 rpm for 2 seconds and reverse rotation at 95 rpm for 2 seconds.
Opposite material: Aluminum die cast (JIS H5302)
Seal ring mounting member: Carbon steel (JIS G4051)
Seal ring: outer diameter 36.4 mm, width 1.5 mm, height 1.8 mm

EXAMPLE 5

Regarding the seal ring prepared in Example 2, a durability test was conducted according to the above conditions 1-a. The results are shown in Table 2. The measured results are shown in a graph in which sliding cycle is the horizontal axis and sliding torque (N·m) is the vertical axis (Fig. 16).

COMPARATIVE EXAMPLES 6 and 7

Granulation was conducted and a seal ring for comparison was prepared in the same manner as in Example 4 except that the fillers shown in Table 2 were used. Durability was measured in the same manner as in Example 4. The results are shown in Table 2 and Figs. 17 and 18 (graph of change in sliding torque).

Table 2

| | Ex. | | Com. Ex. | |
|---|---|---|---|---|
| | 4 | 5 | 6 | 7 |
| Seal ring | | | | |
| PTFE powder | 90 | 90 | 95 | 95 |
| Fillers | | | | |
| POB | 10 | 5 | 5 | |
| MO | | 5 | | 5 |
| $WS_2$ | | | | |
| Durability properties | | | | |
| Durability time | 200,000 Cycles (Discontinued) | 200,000 Cycles (Discontinued) | 87,185 (Discontinued) | 38,359 (Breakage) |
| Change in sliding torque | Fig. 15 | Fig. 16 | Fig. 18 | Fig. 19 |
| Maximum sliding torque Tmax(N·m) | 1.4 | 2.2 | 2.9 | 1.9 |
| Minimum sliding torque Tmin(N·m) | 1.2 | 1.8 | 1.4 | 1.4 |
| (Tmin/Tmax)×100 (%) | 86 | 82 | 66 | 74 |
| Tmax15/Tmax12 | 0.8 | 1.2 | | |

Table 2 (continued)

| | Ex. | | Com. Ex. | |
|---|---|---|---|---|
| Durability properties | | | | |
| Maximum abrasion depth of contacting material (μm) | 1.4 | 0.4 | 2.2 | 2.1 |
| Bulging of seal (mm) | 0.3 | 0.5 | Breakage | Breakage |

INDUSTRIAL APPLICABILITY

The seal ring of the present invention has little deformation by bulging even when used under pressure, can restrict the abrasion of a contacting material even when made of soft metal providing a stable sealing effect over a long period. Furthermore, the seal ring is low in friction and change in sliding torque, particularly under high oil pressure and therefore can significantly improve control and response of a power steering valve device.
Also, the seal ring of the present invention exhibits excellent performance which was conventionally not possible as a seal ring for an automatic transmission which slides at a high rotation speed and for a shock absorber which requires sealing in a reciprocating sliding environment.

**Claims**

1. A power steering valve device equipped with a housing made of soft metal, a seal ring set body and a seal ring which seals oil located between said housing and said seal ring set body, wherein said seal ring comprises 40 to 94 % by weight of polytetrafluoroethylene powder and 6 to 60 % by weight of a filler, wherein the filler essentially consists of aromatic polyoxybenzoylester heat resistant resin powder.

2. A power steering valve device equipped with a housing made of soft metal, a seal ring set body and a seal ring which seals oil located between said housing and said seal ring set body, wherein said seal ring comprises 40 to 94 % by weight of polytetrafluoroethylene powder, 3 to 30 % by weight of aromatic polyoxybenzoylester heat resistant resin powder and 3 to 30 % by weight of molybdenum disulfide powder.

3. A power steering valve device equipped with a housing made of soft metal, a seal ring set body and a seal ring which seals oil located between said housing and said seal ring set body, wherein said seal ring comprises 40 to 94 % by weight of polytetrafluoroethylene powder, 3 to 30 % by weight of aromatic polyoxybenzoylester heat resistant resin powder and 3 to 30 % by weight of tungsten disulfide powder.

4. The valve device of any of Claims 1 to 3, wherein said seal ring is the seal ring of any of Claims 1 to 3 which does not break at 200,000 cycles, has a sliding torque from 10,000 cycles to 200,000 cycles which is at least 75 % of maximum sliding torque during said period and forms abrasion depth of at most 15 μm in a contacting material after 200,000 cycles, when sliding cycles are applied under the following conditions 1.
(Conditions 1)

    Test equipment: test equipment for evaluation of durability of seal ring having basically the same mechanism as a rack and pinion type power steering system
    Oil pressure: 12 MPa
    Oil temperature: 120°C
    Oil type: power steering fluid
    Cycle: One cycle consisting of normal rotation at 95 rpm for 2 seconds and reverse rotation at 95 rpm for 2 seconds.
    Opposite material: Aluminum die cast (JIS H5302)
    Seal ring mounting member: Carbon steel (JIS G4051)
    Seal ring: outer diameter 36.4 mm, width 1.5 mm, height 1.8 mm

5. The valve device of any of Claims 1 to 4, wherein said seal ring is the seal ring of any of Claims 1 to 4 which does not break at 200,000 cycles, has a sliding torque from 10,000 cycles to 200,000 cycles which is at least 75 % of

maximum sliding torque during said period and has a ratio Tmax15/Tmax12 of maximum sliding torque Tmax15 under oil pressure of 15 MPa and maximum sliding torque Tmax12 under oil pressure of 12 MPa from the time when initial fluctuation of sliding torque settles until 200,000 cycles, of less than 1.5, when sliding cycles are applied under the following conditions 1-a.
(Conditions 1-a)

Test equipment: test equipment for evaluation of durability of seal ring having basically the same mechanism as a rack and pinion type power steering system
Oil pressure: 15 MPa
Oil temperature: 135°C
Oil type: power steering fluid
Cycle: One cycle consisting of normal rotation at 95 rpm for 2 seconds and reverse rotation at 95 rpm for 2 seconds.
Opposite material: Aluminum die cast (JIS H5302)
Seal ring mounting member: Carbon steel (JIS G4051)
Seal ring: outer diameter 36.4 mm, width 1.5 mm, height 1.8 mm

**6.** An automatic transmission device equipped with a housing made of soft metal, a seal ring set body and a seal ring which seals oil located between said housing and said seal ring set body, wherein said seal ring comprises 40 to 94 % by weight of polytetrafluoroethylene powder and 6 to 60 % by weight of a filler, wherein the filler essentially consists of aromatic polyoxybenzoylester heat resistant resin powder.

**7.** An automatic transmission device equipped with a housing made of soft metal, a seal ring set body and a seal ring which seals oil located between said housing and said seal ring set body, wherein said seal ring comprises 40 to 94 % by weight of polytetrafluoroethylene powder, 3 to 30 % by weight of aromatic polyoxybenzoylester heat resistant resin powder and 3 to 30 % by weight of molybdenum disulfide powder.

**8.** An automatic transmission device equipped with a housing made of soft metal, a seal ring set body and a seal ring which seals oil located between said housing and said seal ring set body, wherein said seal ring comprises 40 to 94 % by weight of polytetrafluoroethylene powder, 3 to 30 % by weight of aromatic polyoxybenzoylester heat resistant resin powder and 3 to 30 % by weight of tungsten disulfide powder.

**9.** A shock absorber device equipped with a cylinder, a piston and a seal ring which seals oil located between said cylinder and said piston, wherein said seal ring comprises 40 to 94 % by weight of polytetrafluoroethylene powder and 6 to 60 % by weight of a filler, wherein the filler essentially consists of aromatic polyoxybenzoylester heat resistant resin powder.

**10.** A shock absorber device equipped with a cylinder, a piston and a seal ring which seals oil located between said cylinder and said piston, wherein said seal ring comprises 40 to 94 % by weight of polytetrafluoroethylene powder, 3 to 30 % by weight of aromatic polyoxybenzoylester heat resistant resin powder and 3 to 30 % by weight of molybdenum disulfide powder.

**11.** A shock absorber device equipped with a cylinder, a piston and a seal ring which seals oil located between said cylinder and said piston, wherein said seal ring comprises 40 to 94 % by weight of polytetrafluoroethylene powder, 3 to 30 % by weight of aromatic polyoxybenzoylester heat resistant resin powder and 3 to 30 % by weight of tungsten disulfide powder.

**12.** A seal ring comprising 40 to 94 % by weight of polytetrafluoroethylene powder and 6 to 60 % by weight of a filler, wherein the filler essentially consists of aromatic polyoxybenzoylester heat resistant resin powder.

**13.** A seal ring comprising 40 to 94 % by weight of polytetrafluoroethylene powder, 3 to 30 % by weight of aromatic polyoxybenzoylester heat resistant resin powder and 3 to 30 % by weight of molybdenum disulfide powder.

**14.** A seal ring comprising 40 to 94 % by weight of polytetrafluoroethylene powder, 3 to 30 % by weight of aromatic polyoxybenzoylester heat resistant resin powder and 3 to 30 % by weight of tungsten disulfide powder.

FIG. 1

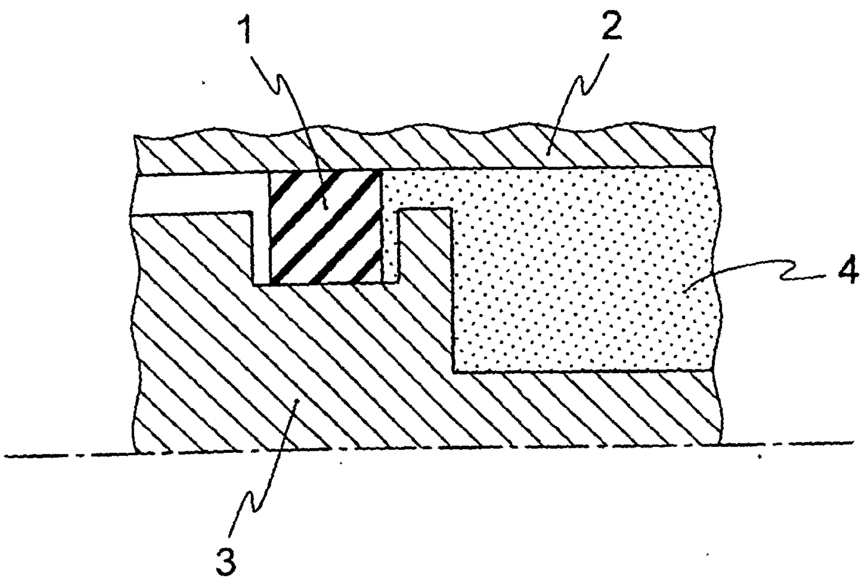


FIG. 2

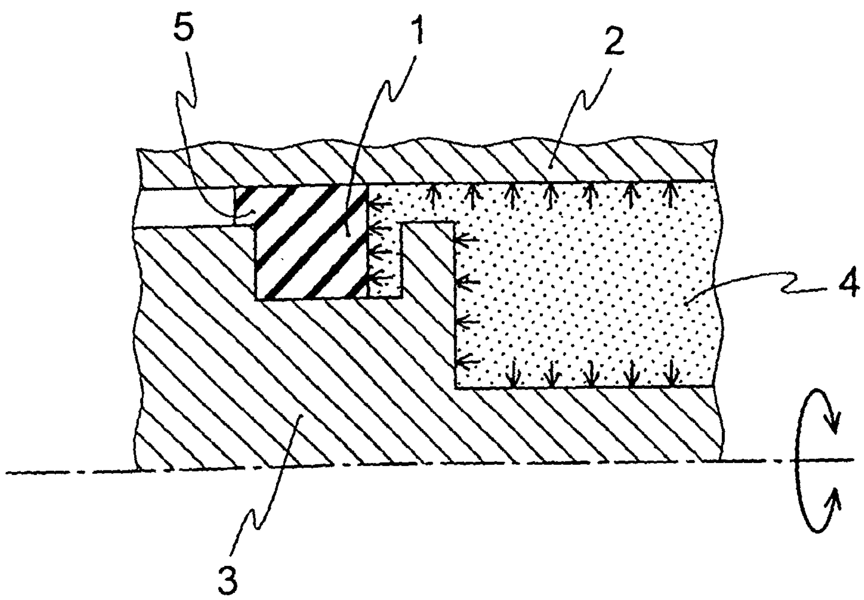

FIG. 3

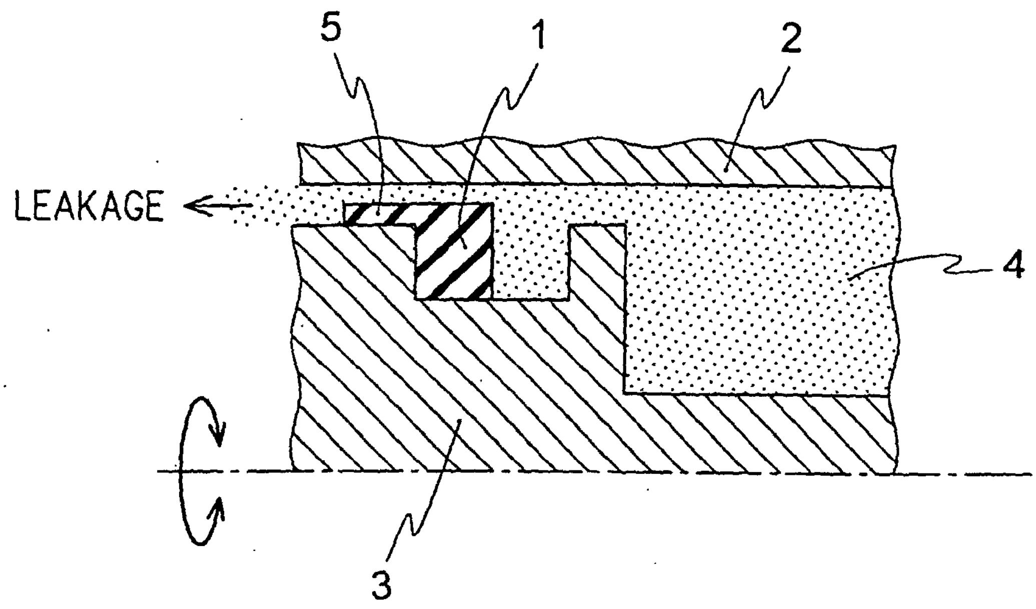


FIG. 4

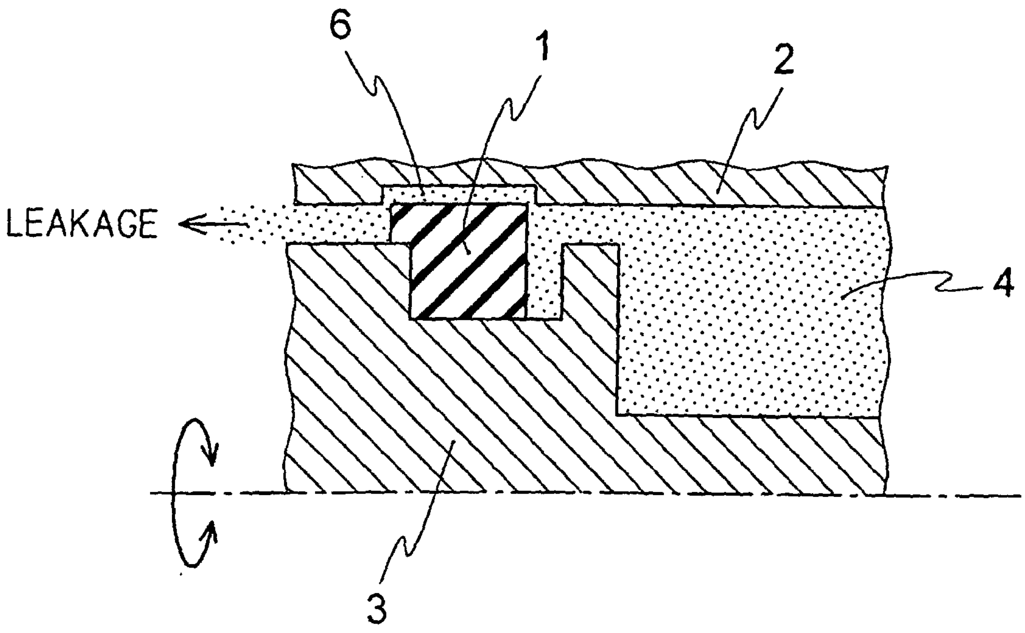

FIG. 5

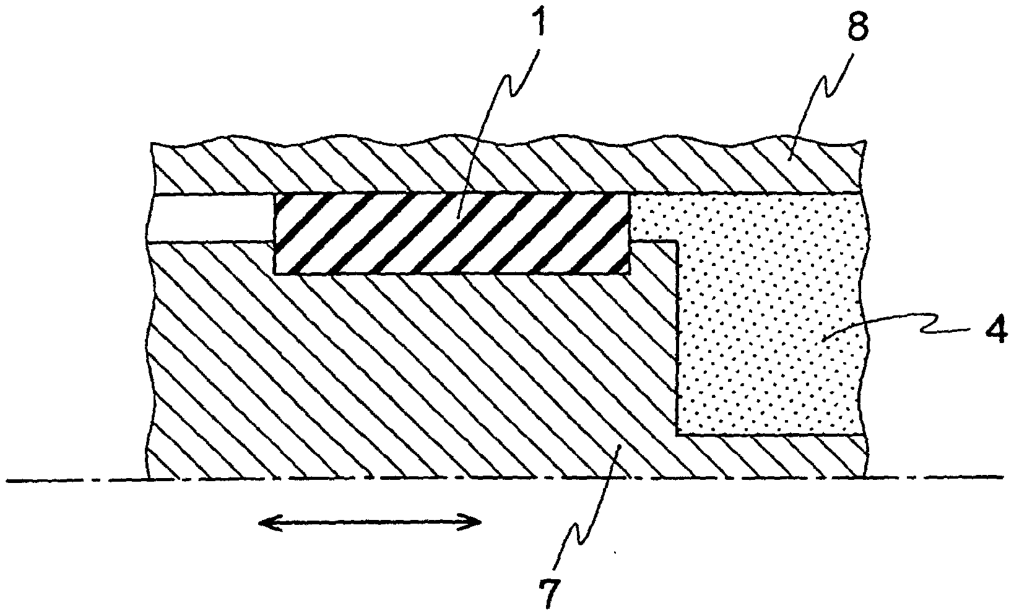


FIG. 6

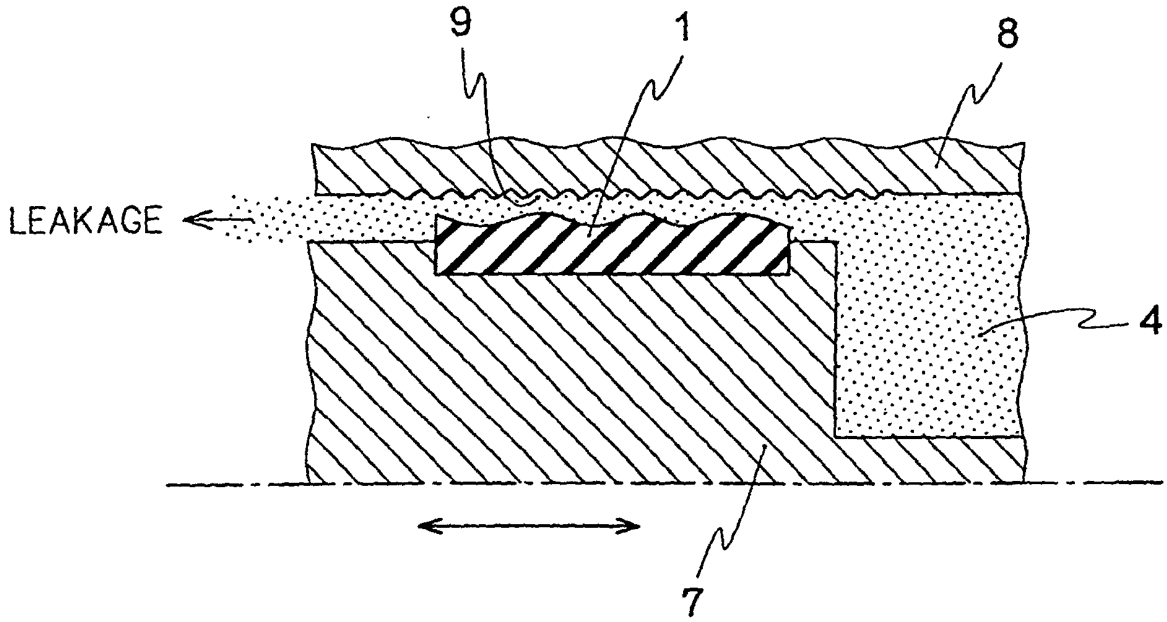

FIG. 7

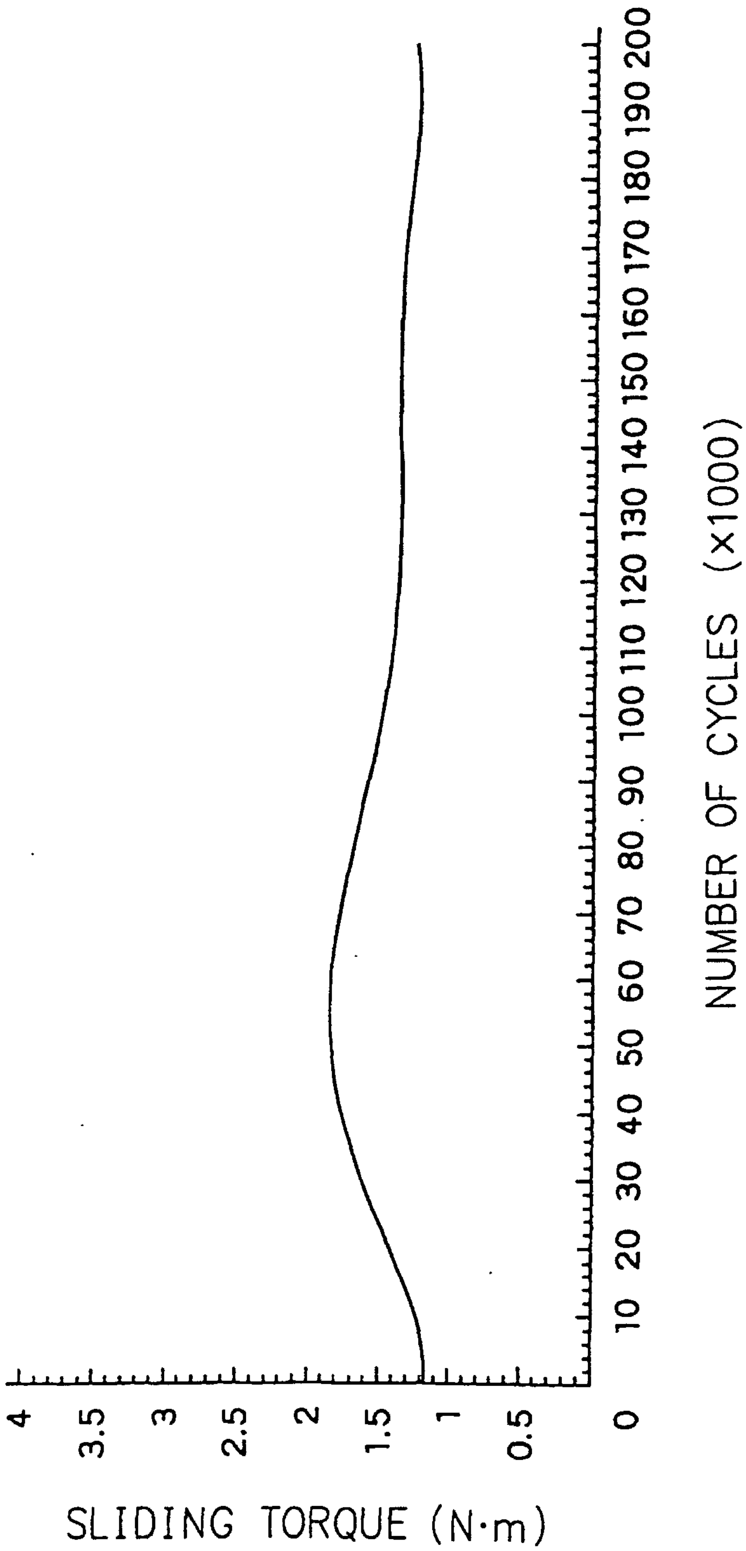
SLIDING TORQUE (N·m)
4
3.5
3
2.5
2
1.5
1
0.5
0
10 20 30 40 50 60 70 80 90 100 110 120 130 140 150 160 170 180 190 200
NUMBER OF CYCLES (×1000)

FIG. 8

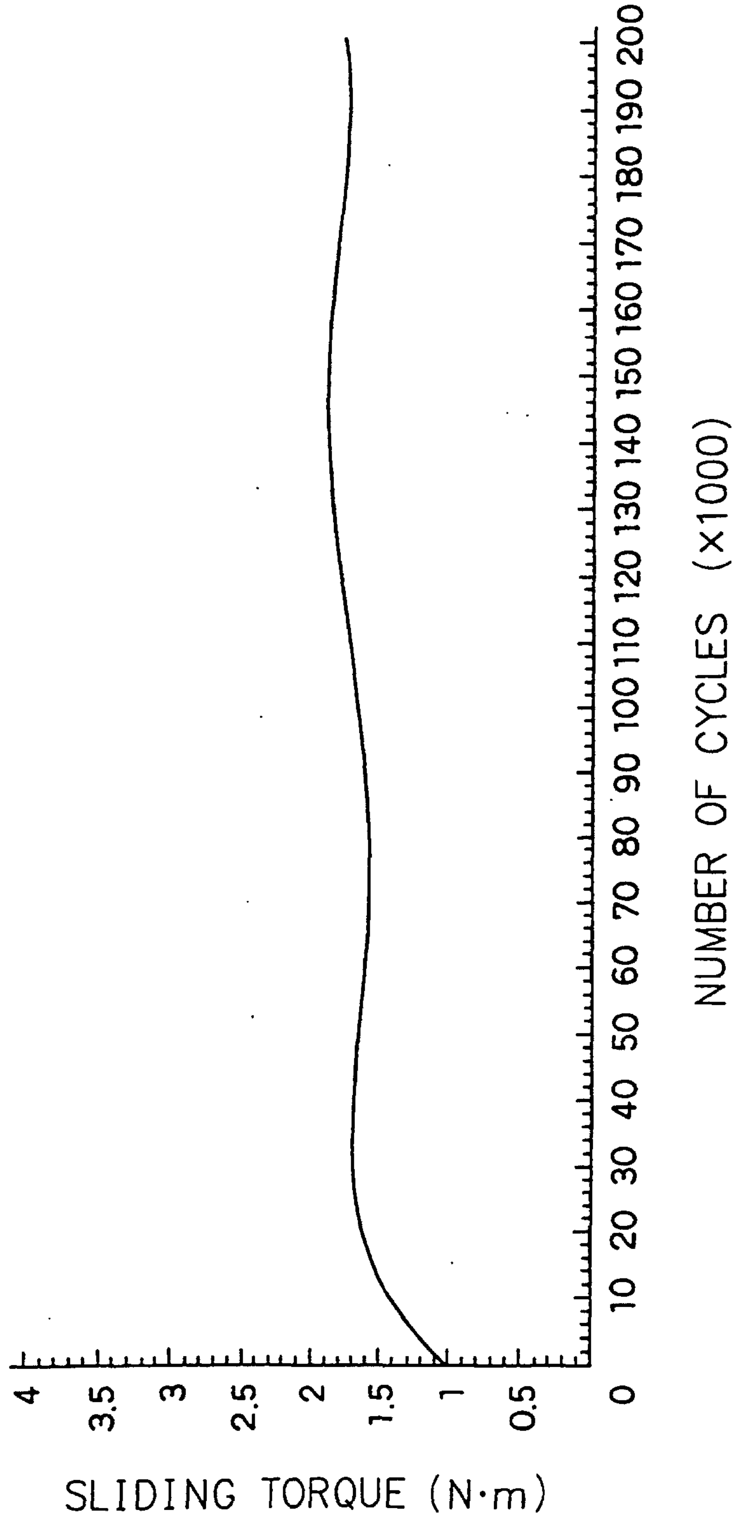
SLIDING TORQUE (N·m)
0
0.5
1
1.5
2
2.5
3
3.5
4
NUMBER OF CYCLES (×1000)
0
10
20
30
40
50
60
70
80
90
100
110
120
130
140
150
160
170
180
190
200

FIG. 9

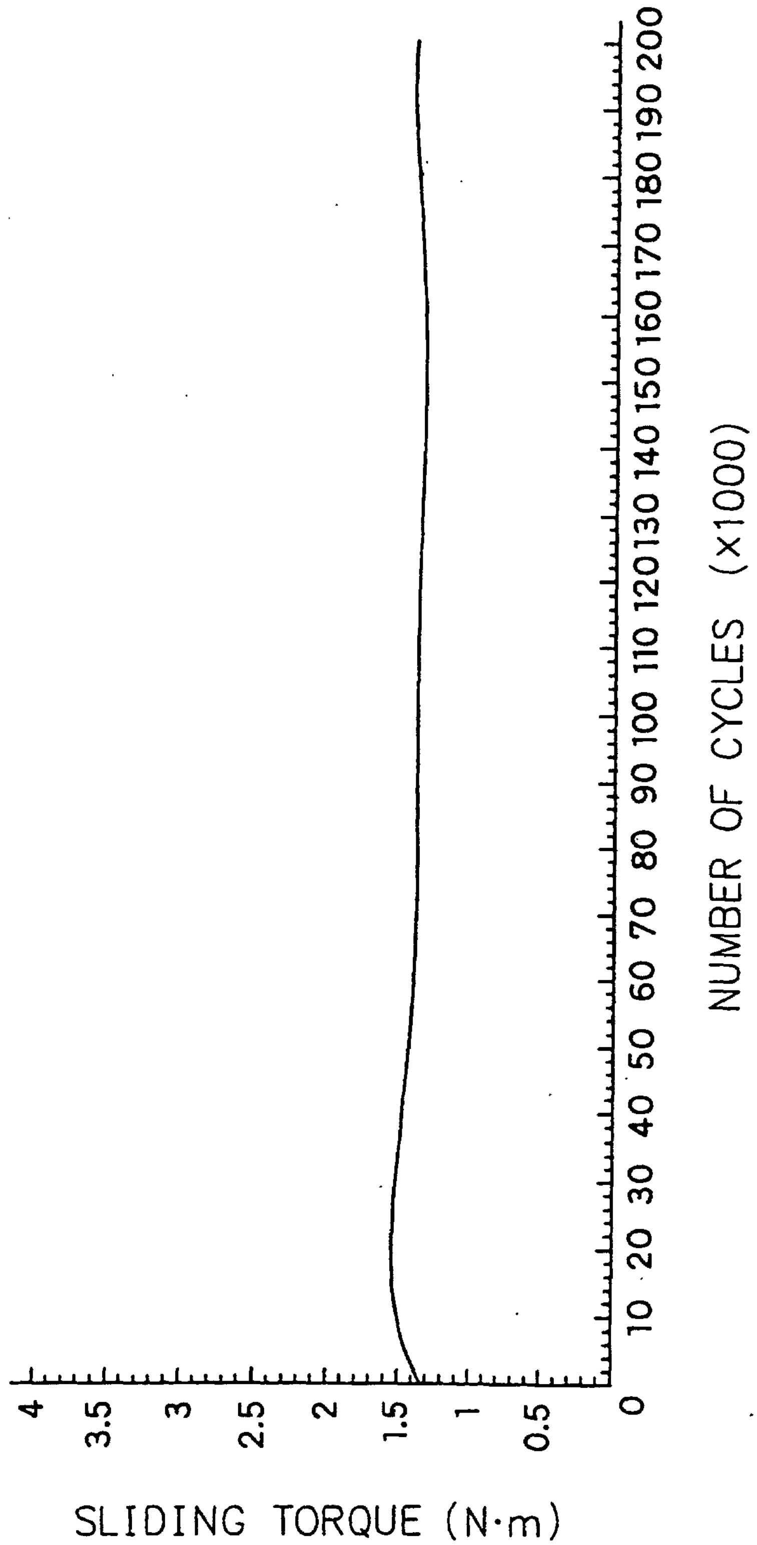
SLIDING TORQUE (N·m)
4
3.5
3
2.5
2
1.5
1
0.5
0
10 20 30 40 50 60 70 80 90 100 110 120 130 140 150 160 170 180 190 200
NUMBER OF CYCLES (×1000)

FIG.10

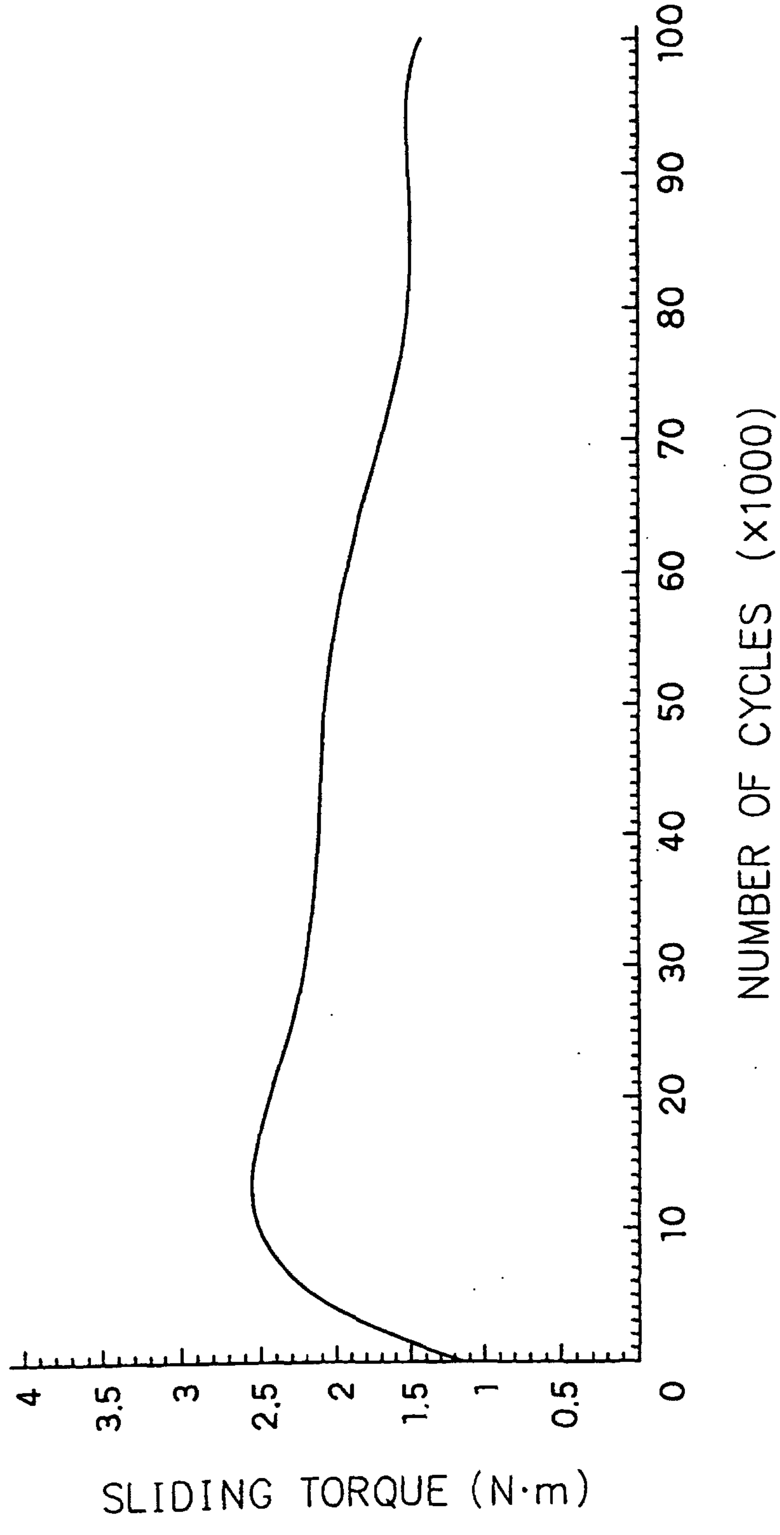

SLIDING TORQUE (N·m)
0
0.5
1
1.5
2
2.5
3
3.5
4
NUMBER OF CYCLES (×1000)
10
20
30
40
50
60
70
80
90
100

FIG. 11

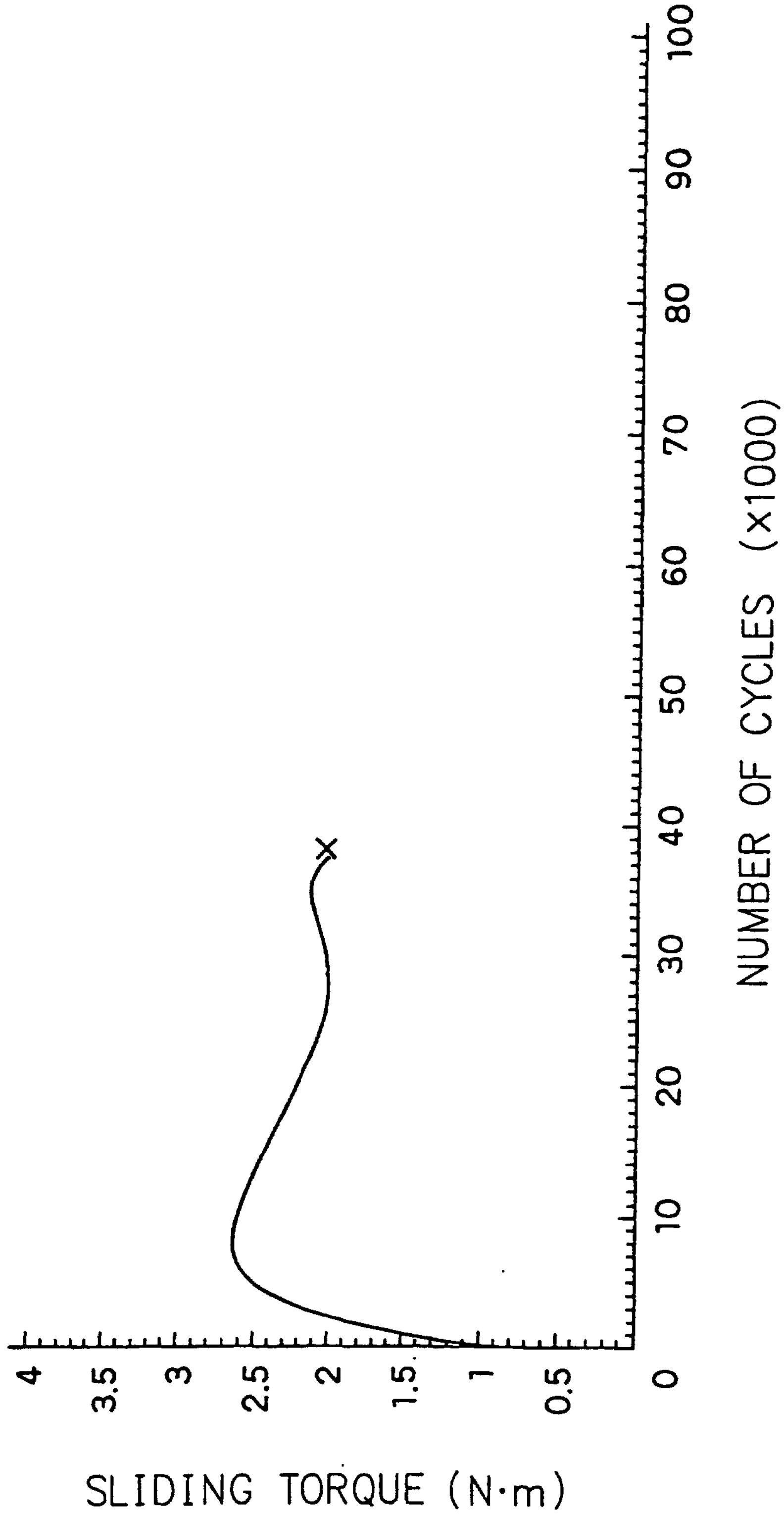

SLIDING TORQUE (N·m)
4
3.5
3
2.5
2
1.5
1
0.5
0
10
20
30
40
50
60
70
80
90
100
NUMBER OF CYCLES (×1000)

FIG.12

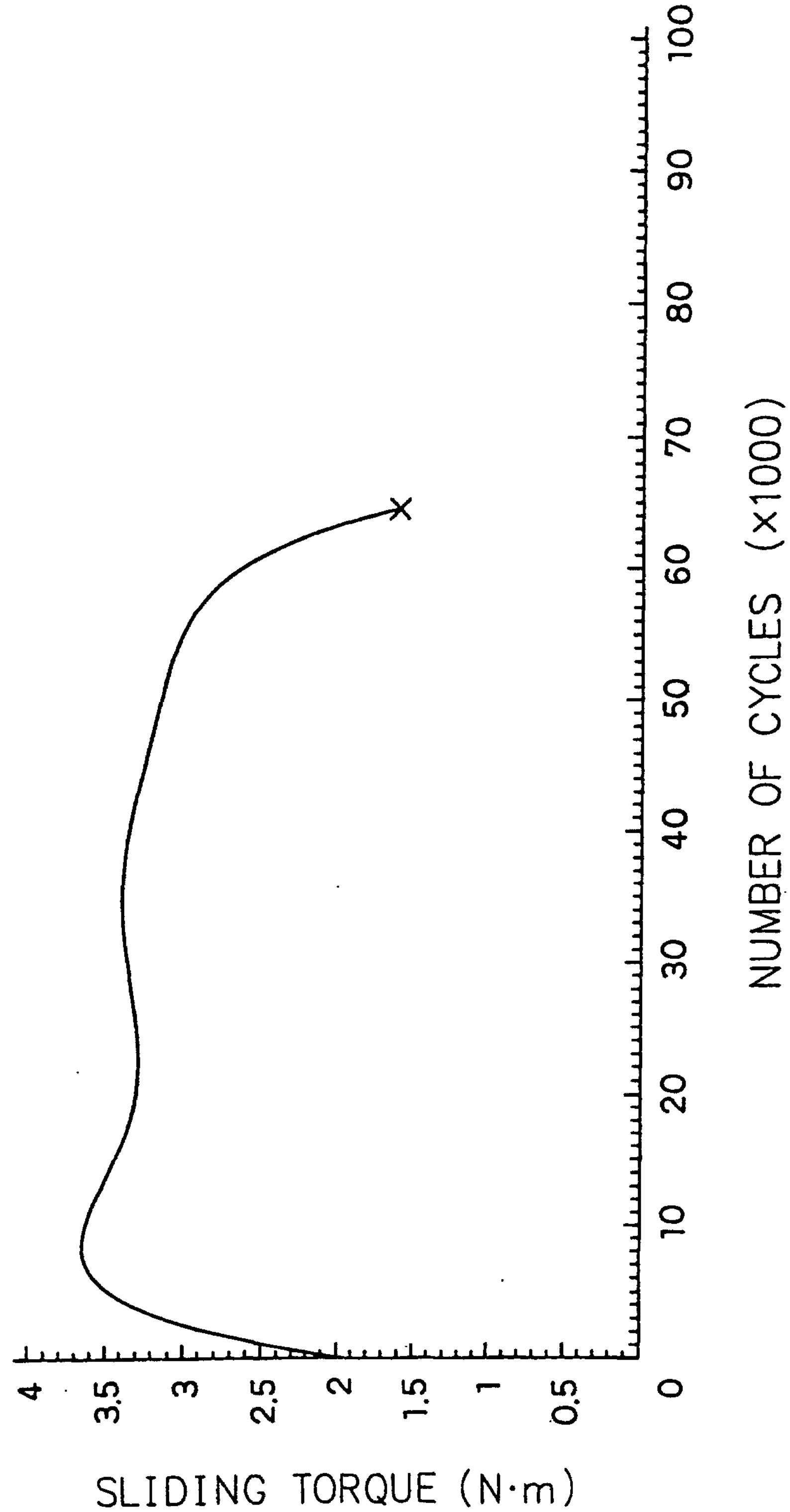
SLIDING TORQUE (N·m)
0
0.5
1
1.5
2
2.5
3
3.5
4
NUMBER OF CYCLES (×1000)
10
20
30
40
50
60
70
80
90
100

FIG.13

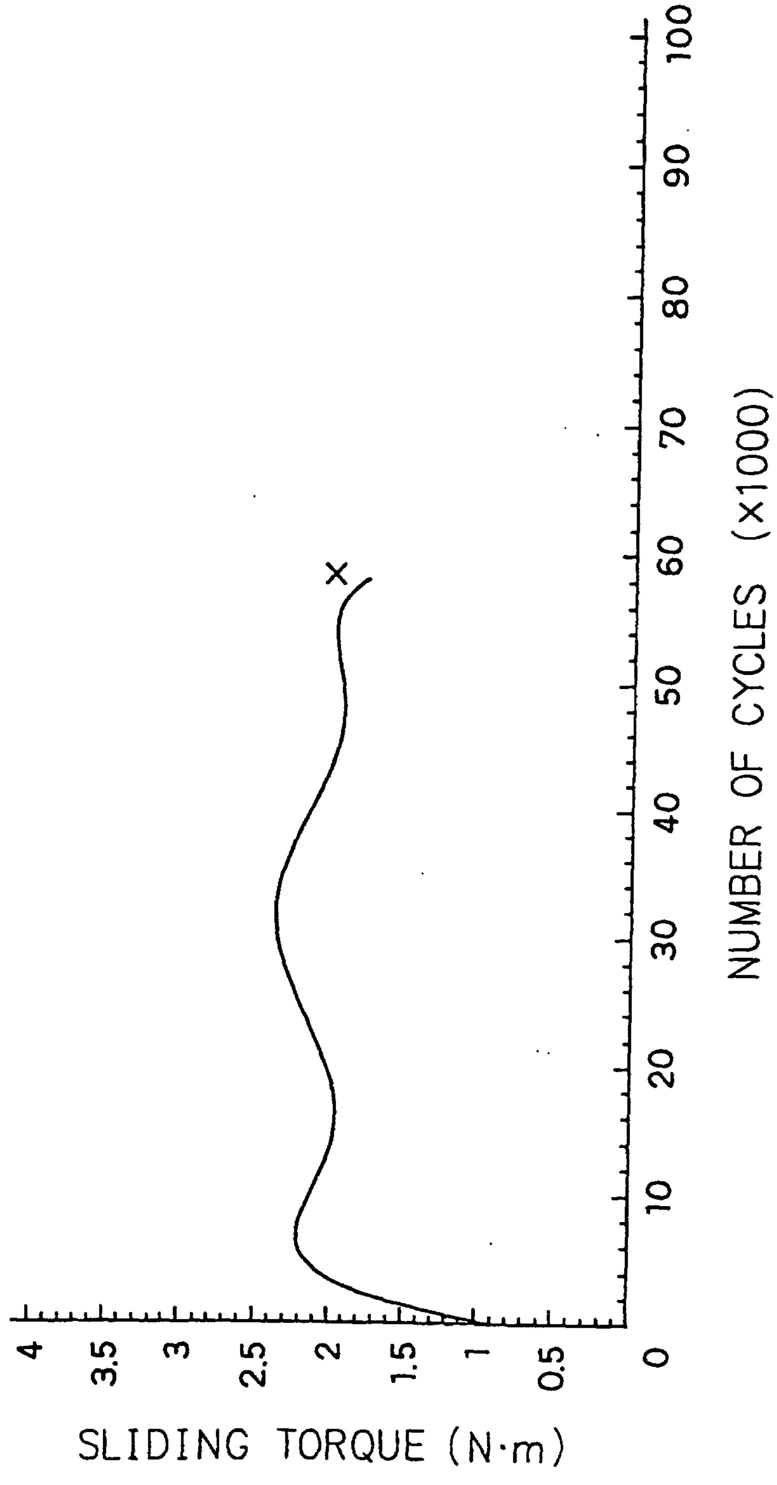
SLIDING TORQUE (N·m)
0
0.5
1
1.5
2
2.5
3
3.5
4
NUMBER OF CYCLES (×1000)
10
20
30
40
50
60
70
80
90
100
×

FIG. 14

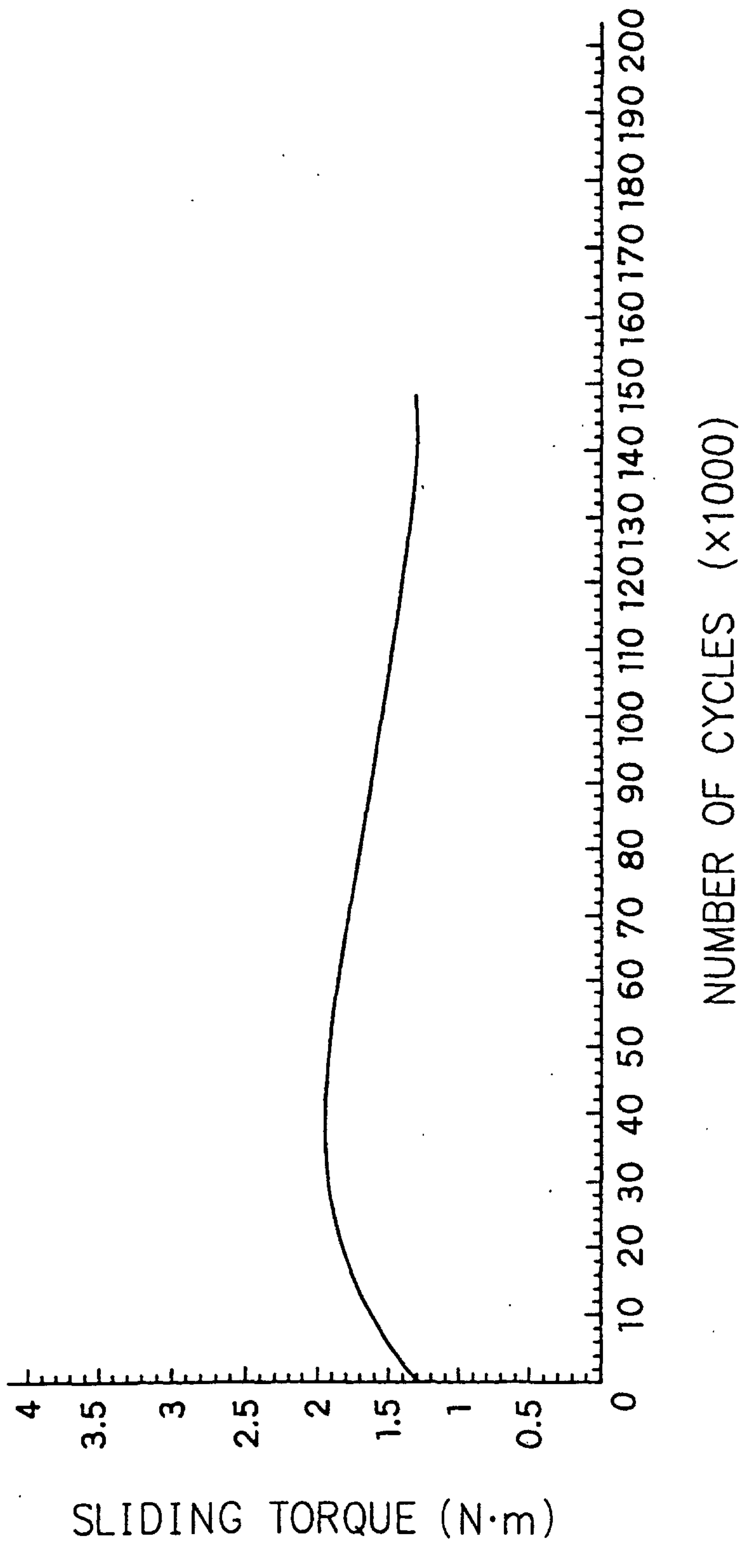
SLIDING TORQUE (N·m)
0
0.5
1
1.5
2
2.5
3
3.5
4
NUMBER OF CYCLES (×1000)
10 20 30 40 50 60 70 80 90 100 110 120 130 140 150 160 170 180 190 200

FIG. 15

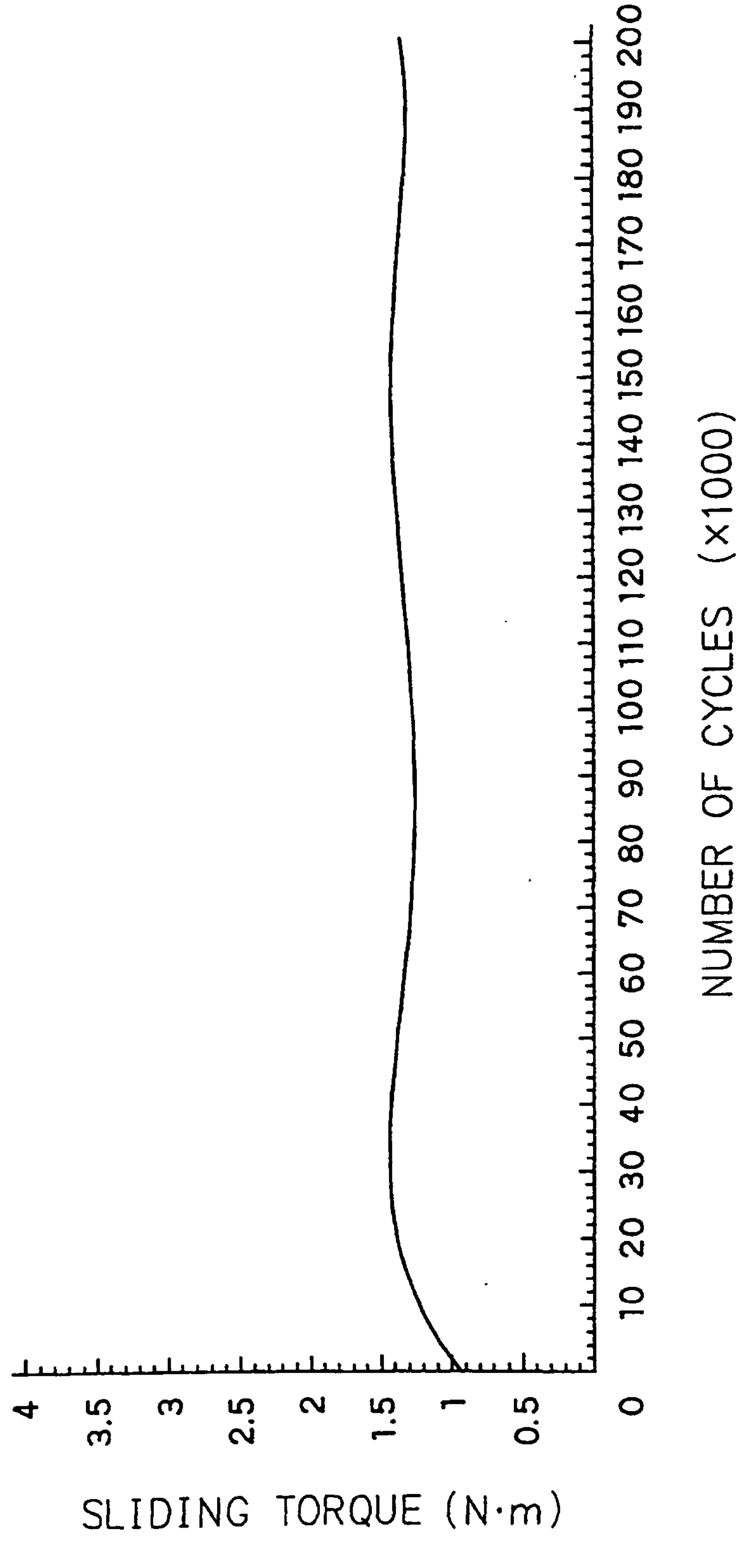
SLIDING TORQUE (N·m)
0
0.5
1
1.5
2
2.5
3
3.5
4
NUMBER OF CYCLES (×1000)
10 20 30 40 50 60 70 80 90 100 110 120 130 140 150 160 170 180 190 200

FIG. 16

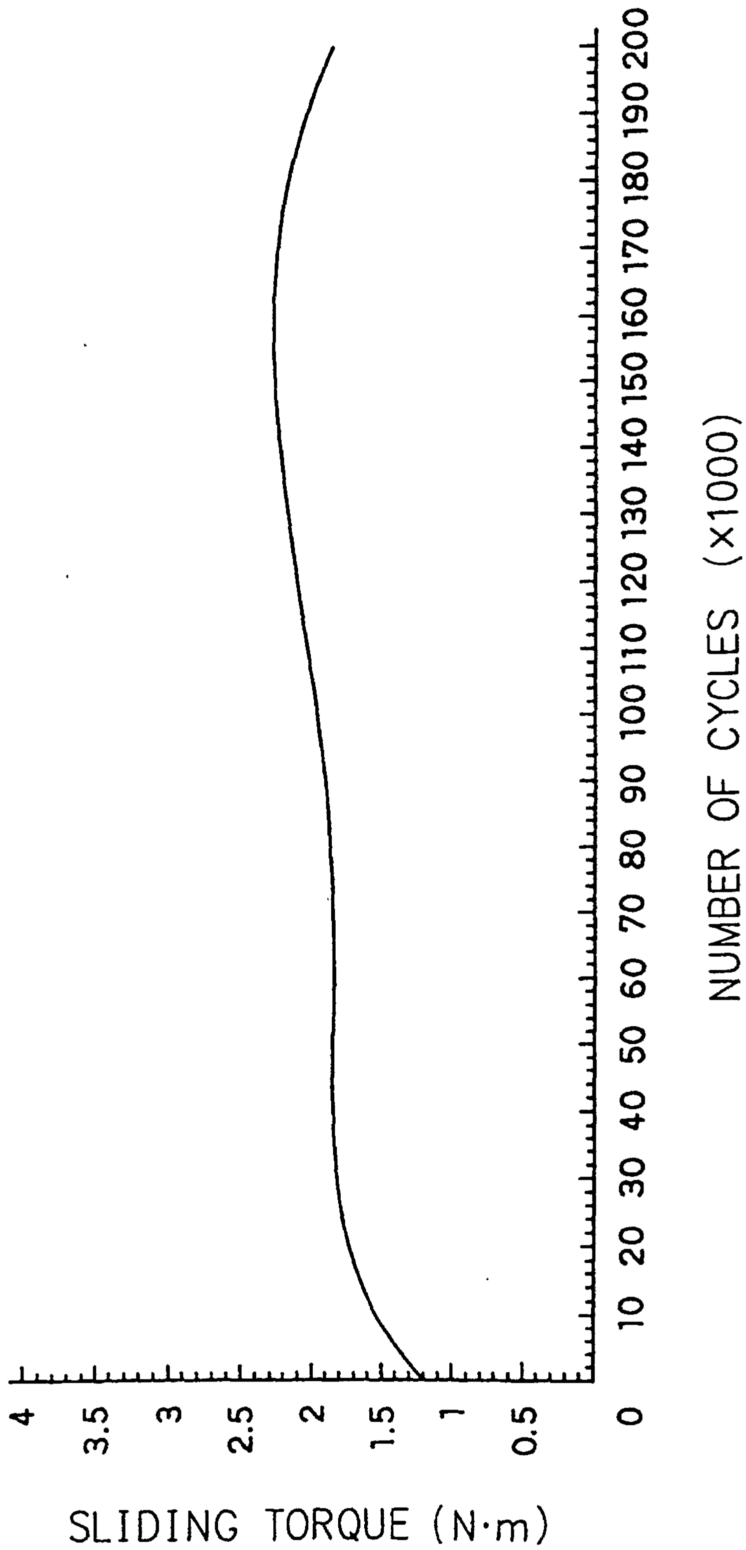
SLIDING TORQUE (N·m)
0
0.5
1
1.5
2
2.5
3
3.5
4
NUMBER OF CYCLES (×1000)
10 20 30 40 50 60 70 80 90 100 110 120 130 140 150 160 170 180 190 200

FIG. 17

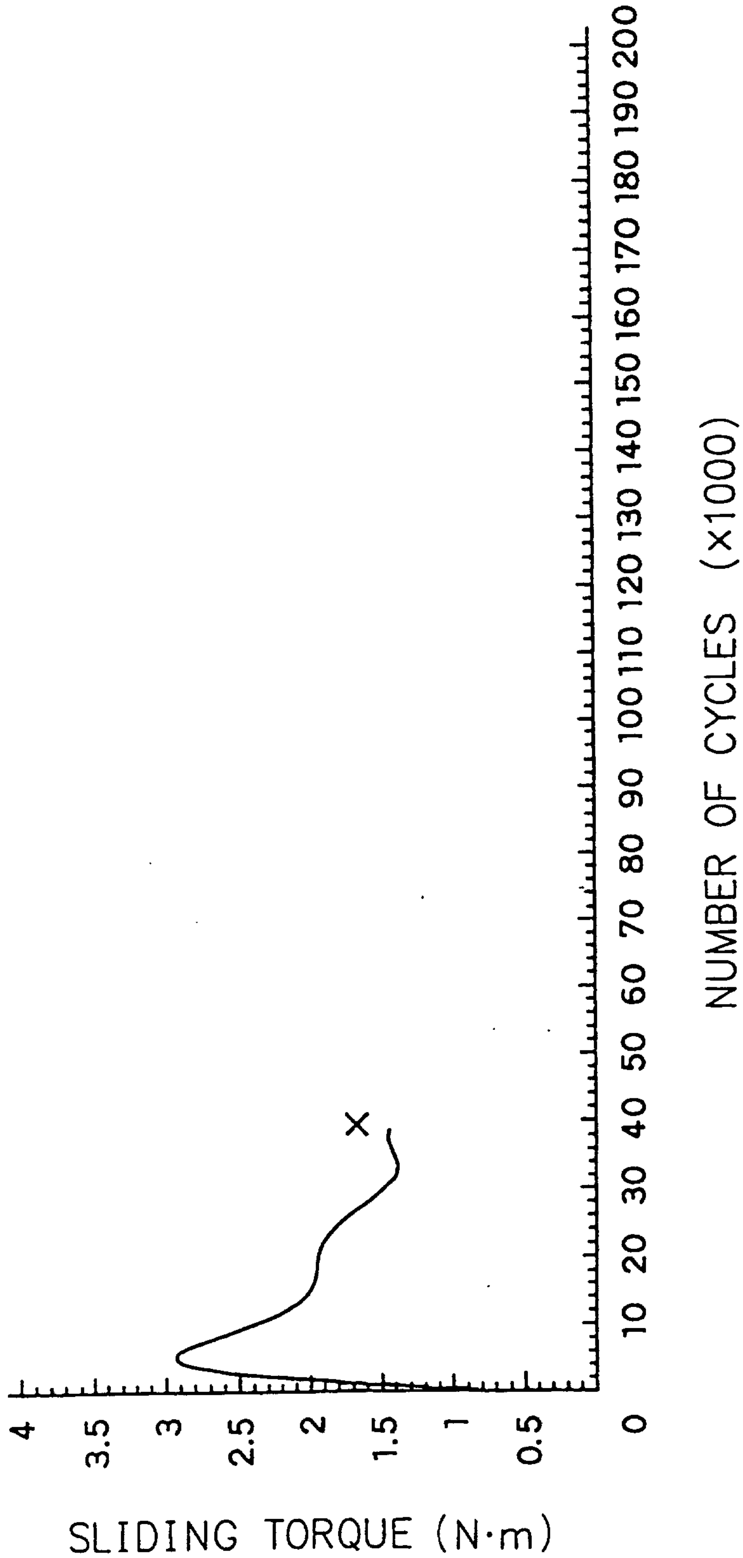
SLIDING TORQUE (N·m)
0
0.5
1
1.5
2
2.5
3
3.5
4
NUMBER OF CYCLES (×1000)
0
10
20
30
40
50
60
70
80
90
100
110
120
130
140
150
160
170
180
190
200
×

FIG. 18

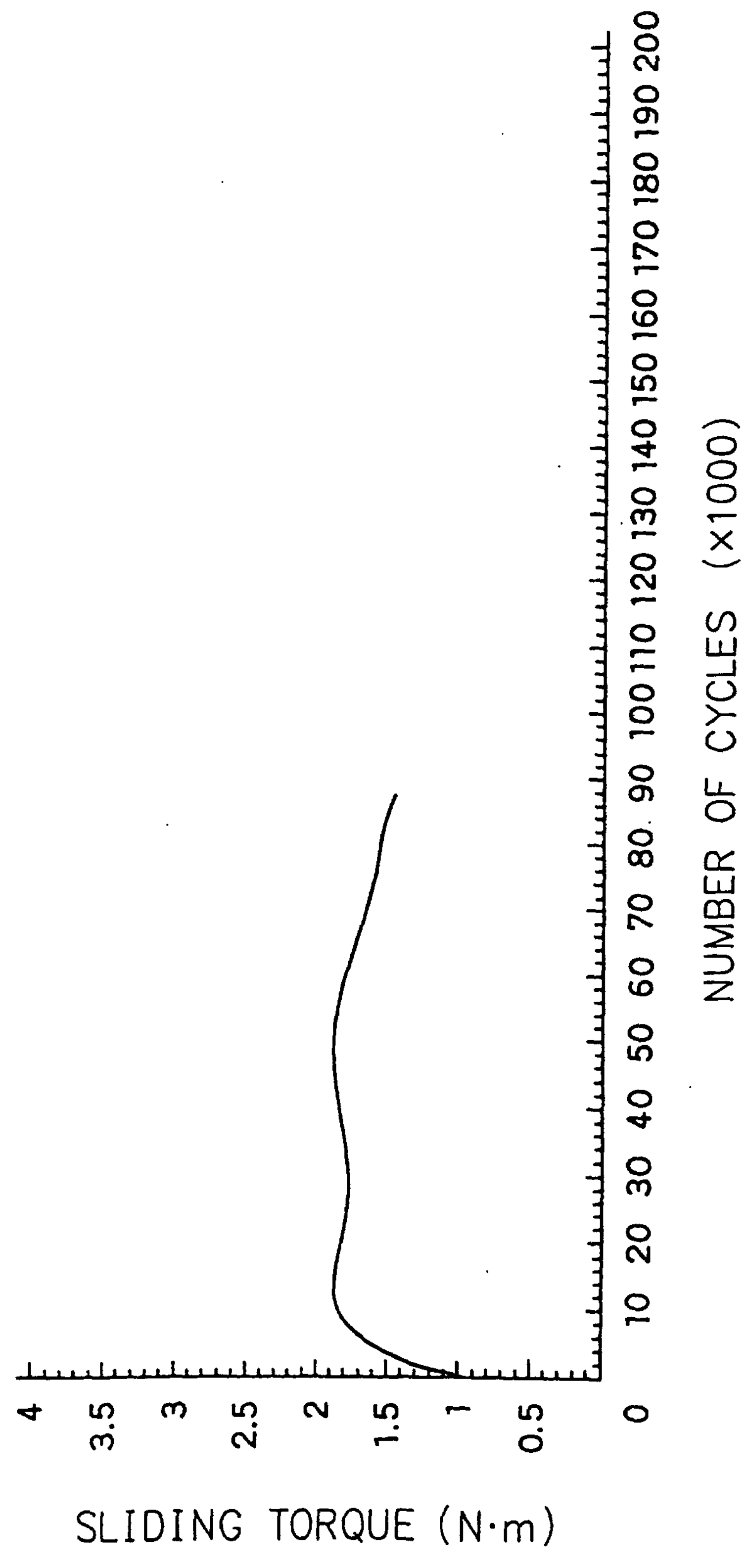
SLIDING TORQUE (N·m)
4
3.5
3
2.5
2
1.5
1
0.5
0
NUMBER OF CYCLES (×1000)
10 20 30 40 50 60 70 80 90 100 110 120 130 140 150 160 170 180 190 200

## INTERNATIONAL SEARCH REPORT

International application No.
PCT/JP01/11445

A. CLASSIFICATION OF SUBJECT MATTER
Int.Cl$^7$ B62D5/083, F16J15/10

According to International Patent Classification (IPC) or to both national classification and IPC

B. FIELDS SEARCHED

Minimum documentation searched (classification system followed by classification symbols)
Int.Cl$^7$ B62D5/083, F16J15/10, C08L27/18

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP, 2000-38568, A (Koyo Seiko Co., Ltd.),<br>08 February, 2000 (08.02.00),<br>Page 4, column 6, lines 5 to 9<br>(Family: none) | 1-3,6-14<br>4,5 |
| P,X | JP, 2001-304420, A (Daikin Industries, Ltd.),<br>31 October, 2001 (31.10.01),<br>(Family: none) | 1-4,11-14 |
| Y<br>A | US, 3644593, A1 (The Carborundum Co.),<br>22 February, 1972 (22.02.72),<br>& DE 2025265 A & GB 1303483 A<br>& FR 2043728 A & JP 49-27415 B | 1-3,6-14<br>4,5 |
| Y | US, 4312772, A1 (Daido Metal Co., Ltd.),<br>26 January, 1982 (26.01.82),<br>& DE 2857283 C & GB 2036194 A<br>& WO 79/00388 A & JP 54-86041 A | 2,3,7,8,10,<br>11,13,14 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 March, 2002 (27.03.02) | Date of mailing of the international search report<br>09 April, 2002 (09.04.02) |
| Name and mailing address of the ISA/<br>Japanese Patent Office<br><br>Facsimile No. | Authorized officer<br><br>Telephone No. |

Form PCT/ISA/210 (second sheet) (July 1998)

**INTERNATIONAL SEARCH REPORT**

International application No.
PCT/JP01/11445

C (Continuation). DOCUMENTS CONSIDERED TO BE RELEVANT

| Category* | Citation of document, with indication, where appropriate, of the relevant passages | Relevant to claim No. |
|---|---|---|
| Y | WO, 93/16126, A1 (Daikin Industries, Ltd.), 19 August, 1993 (19.08.93), & US 5709944 A & EP 583481 A | 1,2,6,7,9,10, 12,13 |
| A | JP, 57-105442, A (Sakagami Seisakusho Ltd.), 30 June, 1982 (30.06.82), (Family: none) | 1-14 |
| A | JP, 61-38214, A (Aishin Wana K.K.), 24 February, 1986 (24.02.86), (Family: none) | 6-8 |
| Y | Microfilm of the specification and drawings annexed to the request of Japanese Utility model Application No. 71581/1980 (Laid-open No. 172472/1981) (Toyoda Machine Works, Ltd.), 19 December, 1981 (19.12.81), (Family: none) | 1-3,11-14 |
| Y | JP, 4-290682, A (Tokico Ltd.), 15 October, 1992 (15.10.92), (Family: none) | 9-14 |

Form PCT/ISA/210 (continuation of second sheet) (July 1998)